# EUROPEAN PATENT SPECIFICATION

(11) **EP 4 023 573 B1**
(45) Date of publication and mention of the grant of the patent: **18.10.2023**
(21) Application number: 21215848.9
(22) Date of filing: 20.12.2021
(51) Int. Cl.: B65G 11/02, B65G 27/00, B65G 27/18, B65G 47/24, B65G 47/256

(54) **FEEDER OF OVAL PARTS AND A METHOD OF FEEDING OVAL PARTS PERFORMED BY THIS FEEDER**
ZUFÜHRVORRICHTUNG FÜR OVALE TEILE UND VERFAHREN ZUR ZUFÜHRUNG OVALER TEILE DURCH DIESE ZUFÜHRVORRICHTUNG
CHARGEUR DE PIÈCES OVALES ET PROCÉDÉ D'ALIMENTATION DE PIÈCES OVALES EFFECTUÉ PAR CE CHARGEUR

(30) Priority: 30.12.2020 CZ 20200728
(43) Date of publication of application: 06.07.2022
(73) Proprietor: VÚTS, a.s., Liberec XI - Ruzodol I 460 01 Liberec (CZ)
(72) Inventor: Pryl, Stanislav, 464 01 Visnova (CZ); Jackmann, Daniel, 460 10 Liberec, Liberec X-Frantiskov (CZ); Fabera, Jaroslav, 460 14 Liberec, Liberec XIV-Ruprechtice (CZ); Bomba, Tomas, 460 05 Liberec, Liberec V-Kristianov (CZ)
(74) Representative: Musil, Dobroslav

(56) References cited:
- CN-A- 109 230 389
- CZ-U1- 34 805
- JP-A- H03 178 382
- JP-A- H05 185 034
- US-A- 4 355 647

## Description

### Technical field

The invention relates to a feeder of oval parts comprising a linear gravity chute for guiding oval parts, the linear gravity chute having an inlet opening at its upper end and abutting a removal bed of oval parts with its lower end, the removal bed being associated with a sensor for detecting oval parts in the removal bed, and a separating device for controlling the release of the individual oval parts from the linear gravity chute to the removal bed, wherein the linear gravity chute is further provided with a sensor for detecting an oval part in the linear gravity chute and the linear gravity chute is coupled to a vibrating device.

The invention also relates to a method of feeding oval parts performed by this feeder.

### Background art

Bushing springs, also known as "silent blocks", are used in a wide range of technical applications, particularly for protection against vibration and shaking. A silent block basically comprises an inner tube on which a rubber damping element is pressed with its inner hole and an outer bushing is pressed onto the outer surface of the damping element.

Until now, the assembly of the silent block assembly has been performed manually or semi-automatically, and so the preparation of the parts and setting their correct orientation when placing them under the pressing unit was carried out manually with visual inspection. The disadvantages of manual preparation and feeding of spring parts include the high demand for human labour and the associated low efficiency, as well as high error rate of production.

Vibrating conveyors are used in a great number of production facilities, especially as part of automatic assembly devices and lines.

CN109230389 discloses a multi-channel linear vibration conveying system which comprises a storage bin of parts, a feeder of parts with four parallel gravity chutes, a manipulator and a control unit. The gravity chutes have an upper end adjacent to the storage bin of parts and at the lower end they are provided with a separating device, with a photoelectric sensor arranged above the separating device and a rotating device of parts arranged below the separating device. The vibrating device shakes the conveying system and, thus deflecting the bin with the supply of loose parts substantially linearly in the direction of movement of the parts through the gravity chutes. As a result, the vibrating device shakes the individual parts into the inlet openings of the gravity chutes through which the parts further proceed to the lower part of the feeder, where their presence is detected by the photoelectric sensor and their movement is limited by the separating device. Consequently, one part is separated at the end of each chute and the other parts are held in the gravity chute by the separating device. Incorrectly oriented parts are rotated at the end of the chutes by an automatic rotating device and removed by the manipulator.

Such a vibration conveying system is used for feeding small disc-shaped parts, e.g., metal screw nuts or washers, made of materials that have a high specific gravity and are hard. This type of vibration conveyor is not suitable for feeding larger flexible parts, for example rubber centres of ring-shaped silent blocks, because it does not comprise means which prevent light flexible parts from getting stuck in the gravity chute.

Another disadvantage of the above-described feeder is the fact that the fed parts which fall through the gravity chutes to the removal beds are not side-oriented and must be rotated in the removal bed by a special rotating device before removal.

The objective of the invention is to remove or at least minimize the disadvantages of the background art.

### Principle of the invention

The objective of the invention is achieved by a feeder of oval parts, which is mounted on a base and includes a vibrating device, an upper part of the feeder having a linear gravity chute inlet for inserting oval parts, a lower part of the feeder with a lower part of the linear gravity chute, at least one sensor for detecting oval parts in the linear gravity chute, a removal bed and at least one sensor for detecting oval parts in the removal bed. The linear gravity chute is in the upper part of the feeder provided with an inlet opening of the linear gravity chute and in the lower part of the feeder it adjoins the removal bed, wherein the inlet opening is located higher than the removal bed, so that the oval parts inserted in the inlet opening are rolled one by one, under the action of the gravitational force, directly obliquely down the inclined plane of the bottom plate of the linear gravity chute and are thus fed into the removal bed in the lower part of the feeder, where they are collected by a handling device. Above the removal bed, a separating device for controlled release of the individual oval parts into the removal bed is arranged in the linear gravity chute. The feeder is adapted by the shape of the linear gravity chute and the shape of the removal bed to feed and remove lightweight, e.g., hollow, oval metal parts and/or flexible oval parts, e.g., rubber rings for pressing silent blocks. Such oval parts are characterized by shape instability, low specific gravity, flexibility, technological protrusions and impurities **on their surface** and therefore tend to get stuck during movement through the linear gravity chute in the feeder, e.g., by adhering to the side wall of the linear gravity chute or by adhering to one another. The upper end of the linear gravity chute of the feeder and the lower end of the linear gravity chute of the feeder are movably mounted on the base such that the lower movably mounted end of the linear gravity chute is adjacent to the fixedly mounted removal bed. The jammed parts are released using the vibrating device in such a manner that the vibrating device moves the upper end of the linear gravity chute of the feeder in a horizontal direction, which is perpendicular to the direction of the movement of the parts in the gravity chute. As a result, the parts are not only released from one another and from the bottom plate of the linear gravity chute, on which they roll off, but also from the surfaces of lateral guides of the oval parts in the linear gravity chute.

The lower end of the linear gravity chute of the feeder is rotatably mounted on the base in a bearing, such as a flange bearing, wherein the axis of rotation of the bearing, and thus the axis of rotation of the lower end of the linear gravity chute of the feeder mounted therein, is vertical and thus substantially perpendicular to the horizontal upper surface of the base. The upper end of the linear gravity chute of the feeder is mounted slidably reciprocally on the base, e.g., on sliding pads or carriages. The vibrating device, which moves the linear gravity chute of the feeder, displaces its upper end, e.g., by the strikes of impact heads, the upper end of the linear gravity chute moving **on** the base so that it rotates about a vertical axis of the bearing arranged in the lower part of the feeder. As a result, the upper end of the linear gravity chute moves back and forth in the horizontal plane about said vertical axis, substantially in a circle.

The vibrating device comprises at least one drive, e.g., a pneumatic cylinder or stepper electric motor which is used to reciprocally move the upper end of the linear gravity chute of the feeder and at least one stop, e.g., a stop of a supporting leg of the feeder attached to the base, which serves to limit the movement of the upper end of the linear gravity chute of the feeder. The upper end of the linear gravity chute of the feeder can thus only move along a path limited by the stop.

During the displacement of the linear gravity chute of the feeder, which is caused by the vibrating device, the supply of fed oval parts in the linear gravity chute is shaken. The feeder is therefore preferably provided with a transparent top cover of the linear gravity chute made, for example, of transparent Plexiglas, which prevents the oscillating oval parts from falling out of the linear gravity chute and at the same time enables their visual inspection.

In order to ensure that the feeder operates smoothly and without errors, there should be always only one oval part to be removed by the handling device in the removal bed of the feeder. For this purpose, the feeder is preferably equipped in its lower part with a separating device arranged above the removal bed and comprising a first flap, a second flap and a blower of the oval parts. The first flap is arranged higher than the second flap and serves to separate controllably one oval part from the supply of oval parts in the linear gravity chute. The second flap is arranged below the first flap and serves to release controllably one separated oval part to the removal bed. The blower of oval parts comprises at least one nozzle that is preferably arranged between the flaps and serves to release a stuck or jammed oval part and/or oval part adhered to the wall of the lateral guide of the linear gravity chute or to another oval part by an air stream.

In a preferred embodiment, the vibrating device, the separating device, the sensor for detecting oval parts in the linear gravity chute and the sensor for detecting oval parts in the removal bed are coupled to a control unit which is equipped with a computer program for controlling the process of feeding and removing oval parts. The control unit evaluates the data from the sensor for detecting oval parts in the linear gravity chute above the separating device and the data from the sensor for detecting and identifying the type of oval part in the removal bed and according to whether or not oval parts are detected by these sensors, the control unit controls the vibrating device, the separating device and, if necessary, also the automatic handling device which picks up the oval parts from the removal bed.

In addition, the objective of the invention is achieved by a method of feeding oval parts which is performed by the feeder, wherein at least one oval part inserted into the inlet opening of the linear gravity chute of the feeder moves by gravity through the linear gravity chute of the feeder towards the removal bed, wherein the oval part is released to roll through the linear gravity chute, wherein the linear gravity chute is moved reciprocally swingingly by the vibrating device, in the horizontal plane about the vertical axis of the bearing, in a direction substantially perpendicular to the direction of movement of the oval parts through the linear gravity chute. The linear gravity chute moves in this manner preventively to prevent the oval part from getting stuck in the chute and/or prevent the oval part from adhering to another oval part. Then the oval part in the lower part of the feeder is automatically separated by the separating device and released into the removal bed.

The oval part is picked up from the removal bed, ideally by an automatic handling device, and transferred to a production unit, such as a dipping machine or a press.

The above-described method is preferably carried out during the feeding of an oval part in such a manner that if the camera and/or the sensor for detecting the oval part in the linear gravity chute detects that the oval part is stuck in the linear gravity chute of the feeder, the control unit automatically triggers the vibrating device to apply an intermittent reciprocating swinging action on the linear gravity chute to release the stuck oval part. In this preferred embodiment, the vibrating device is at first switched off automatically and the linear gravity chute does not move, which is advantageous for saving electricity and for inserting the oval part into the inlet opening of the linear gravity chute. Once the stuck part is detected, the vibrating device starts automatically.

In order to release light metal oval parts during the feeding and removing of oval parts, e.g. metal tubes with a diameter of 4 cm, a length of 9 mm and a weight of 150 g, or dirty and flexible oval parts, e.g. rubber rings for the production of silent blocks, the linear gravity chute is reciprocally oscillating in sequences of impacts which are interrupted by intervals, so that the upper end of the linear gravity chute of the feeder is preferably oscillated in sequences of oscillations, one to several oscillations, which are interrupted by intervals. During the sequence of oscillations, oval parts are separated from the walls of the lateral guide of the linear gravity chute, whereupon during the following interval, there is a gravitational displacement of the oval part through the linear gravity chute downwards towards the removal bed. If the feeder oscillates without interruptions, gravitational displacement of oval parts through the linear gravity chute downwards does not always occur. The above-described process can be applied especially if the sensor for detecting an oval part in the linear gravity chute detects absence of a part in the linear gravity chute above the separating device. In this case, the control unit starts a sequence of impacts followed by an interval or another sequence of impacts followed by another interval, which is repeated until the jammed oval part is released. However, if, after a predetermined number of repetitions of impact sequences and intervals, an oval part is still not detected by the sensor for detecting an oval part in the linear gravity chute above the separating device, the control unit issues a warning to the operator of the system.

### Description of drawings

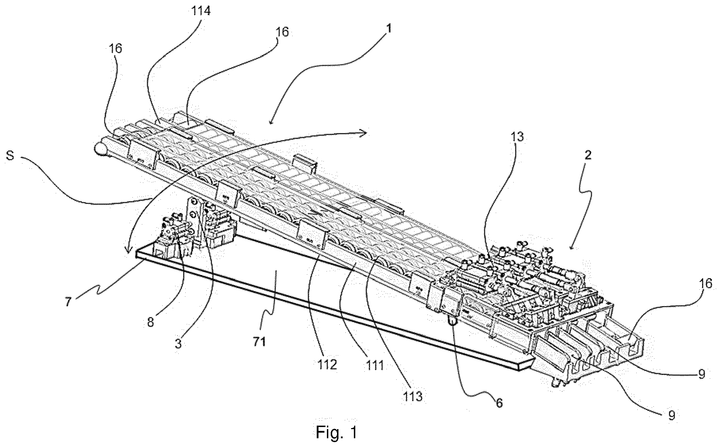

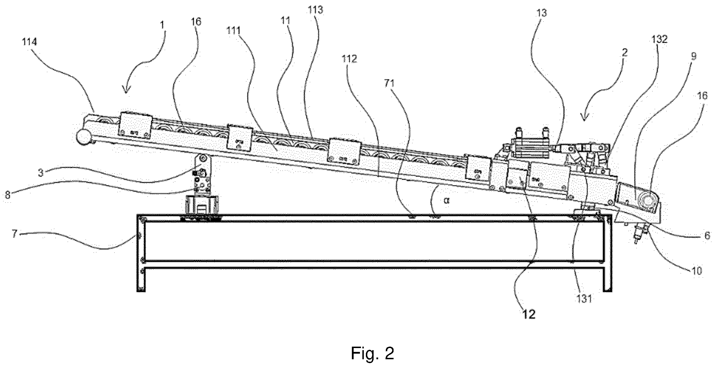

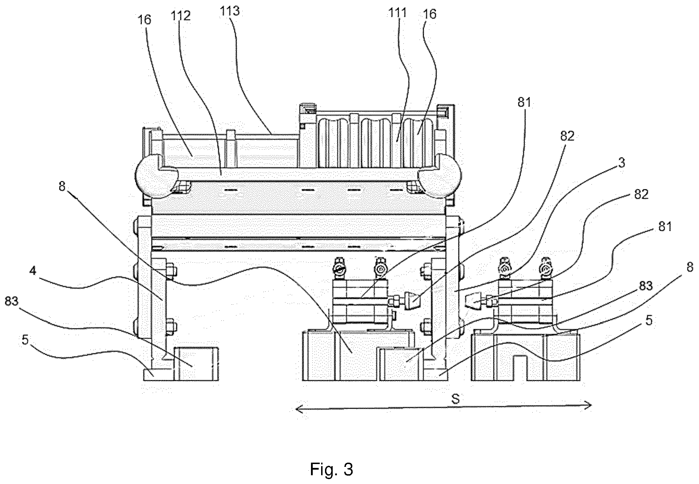

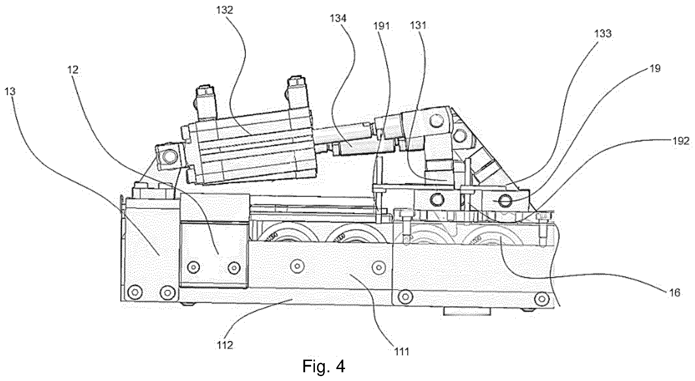

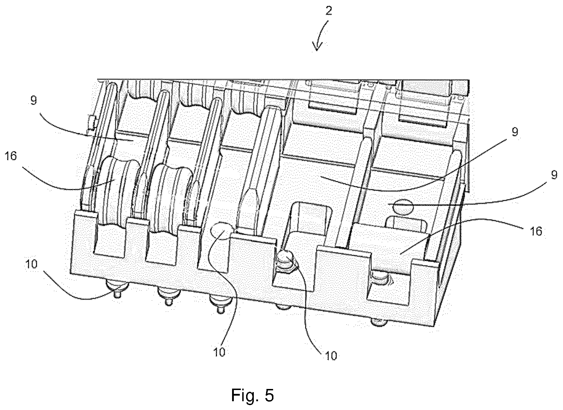

The invention is schematically represented in the drawing, wherein Fig. 1 shows a view of a feeder of parts, Fig. 2 shows a side view of the feeder shown in Fig. 1, Fig. 3 shows a front view of the feeder of parts shown in Fig. 1, Fig. 4 shows a side view of the lower part of the feeder with a separating device, Fig. 5 shows the lower part of the feeder.

### Examples of embodiment

The invention will be described with reference to an exemplary embodiment of a feeder of oval parts and examples of the method of feeding oval parts by the feeder.

The feeder of oval parts (Fig. 1, 2) comprises an upper part 1 of the feeder and a lower part 2 of the feeder, a mounting 3 of the upper part 1 of the feeder on a base 7, a bearing 6 of the mounting of the lower part 2 of the feeder on the base 7 and a vibrating device 8.

In an exemplary embodiment of the invention, the upper part 1 of the feeder comprises five inlet openings 114 for inserting oriented oval parts 16 into linear gravity chutes 11 by a human operator and/or unillustrated automatic loading device. The lower part 2 of the feeder comprises five removal beds 9. Five parallel linear gravity chutes 11 are arranged between the inlet openings 114 and the removal beds 9. Each linear gravity chute 11 comprises a bottom plate 112, a lateral guide 111 and an upper cover 113. Three linear gravity chutes 11 are used for feeding rubber rings, the other two linear gravity chutes 11 are used for feeding metal tubes. Each removal bed 9 comprises a sensor 10 for detecting the presence and type of oval part 16 to be removed in the removal bed 9 (Fig. 5).

In another embodiment, the feeder comprises two, three, four or six to fifteen linear gravity chutes 11 arranged parallel next to each other, wherein always at least two linear gravity chutes 11 are used for feeding one type of oval part 16, so that the feeding of each type of oval part 16 is backed up in case the oval part 16 gets stuck or jammed in the feeder.

The lower part 2 of the feeder comprises a separating device 13 (Fig. 4) which is arranged above the removal bed 9. The separating device 13 comprises a first flap 131, a first flap drive 132, a second flap 133 and a second flap drive 134.

The lower part 2 of the feeder comprises a blower 19 of oval parts 16 which, in a preferred embodiment, is integrated into the separating device 13 and comprises at least two nozzles 191, 192 in each linear gravity chute 11.

In addition, the lower part 2 of the feeder further comprises a sensor 12 for detecting oval parts 16 in the linear gravity chute 11, such as a photoelectric sensor for detecting non-metallic oval parts 16 and/or an inductive electromagnetic sensor for detecting oval parts 16 containing metal, the sensor 12 being arranged above the first flap 131.

The feeder is mounted on a top plate of the base 7, on its substantially horizontal upper surface 71. The mounting 3 of the upper part 1 of the feeder in the exemplary embodiment (Fig. 3) comprises two supporting legs 1 and two sliding pads 5. The feeder is mounted with its upper part 1 on the substantially horizontal base 7, so that each supporting leg 1 is attached at one end to the upper part 1 of the feeder and at the other end is movably mounted on the sliding pad 5, e.g., on a plastic or metal sliding foil, the sliding pad 5 being mounted on the base 7. The linear gravity chute 11 in the lower part 2 of the feeder is rotatably mounted in the bearing 6 (Fig. 2), e.g., in a flanged ball bearing, which is mounted on the base 7, allowing the linear gravity chute 11 to rotate about the axis of the bearing 6, which is substantially perpendicular to the upper surface 71 of the base. The removal bed 9, which is in the lower part of the feeder 2 adjacent to the lower end of the linear gravity chute 11, is mounted fixedly on the base 7 for easier removal of the parts 16 from the removal bed 9 by a handling device (not shown).

In another embodiment, the feeder comprises any number of supporting legs 4, which are all mounted on the sliding pads 5. In another embodiment, the feeder comprises only one supporting leg 4 attached to the upper part 1 of the feeder and mounted on the sliding pad 5 on the base 7.

The vibrating device 8 of the feeder (Fig. 3) is in an exemplary embodiment attached to the base 7 below the upper part 1 of the feeder and includes two rubber impact heads 82, two drives 81 of the impact heads 82, e.g., pneumatic cylinders mounted on the base 7, and two stops 83 mounted on the base 7.

In another embodiment, the vibrating device 8 comprises two to twelve impact heads 82 and only one drive 81 which drives at least two coupled impact heads 82.

In another embodiment of the feeder, the vibrating device 8 does not comprise an impact head 82, wherein the drive 81 is coupled to the supporting leg 4 or to another suitable part of the feeder, e.g., to the lateral guide 111 of the linear gravity chute 11.

The specific embodiment of the vibrating device 8 and the arrangement of its elements 81, 82, 83 depend to some extent on the size of the feeder and the spatial arrangement of the production equipment of which the feeder is a part. In the exemplary embodiment shown in Fig. 3, the vibrating device 8 includes two opposite impact heads 82, which serve to strike only the first of the two supporting legs 4, while the stops 83 limiting the lateral displacement of the feeder caused by the impacts of the heads 82 are preferably located at both the first and second supporting legs 4.

In another embodiment of the feeder, the vibrating device 8 serves to strike only the first supporting leg 1 and the stops 83 are located only at the second supporting leg 4.

In other embodiments of the feeder, the location and numbers of the impact heads 82 and stops 83 of the supporting legs 1 are combined in various ways, but it is always the case that if the vibrating device 8 comprises an impact head 82 which serves to strike the supporting leg 4 from the first side, e.g., from the righthand side, at least one stop 83 of this or some other supporting leg 4, is arranged, i.e., for example, from the left-hand side, which limits the displacement of the feeder caused by the impact of this opposite impact head 82.

In yet another embodiment, the vibrating device is arranged on the base such that the impact heads 82 serve to strike the linear gravity chute 11, for example by striking the outer side of the lateral guide 111 of the linear gravity chute 11.

In the exemplary embodiment of the feeder shown in Fig. 2, the upper part 1 of the feeder is arranged higher than the lower part 2 of the feeder, so that the bottom plate 112 of the linear gravity chute 11 forms a sharp angle α of inclination of 10° to 89°, ideally 20° to 40°, with the upper surface 71 of the plate of the base 7. At this magnitude of the angle α of inclination, the oval part 16 rolls over the bottom plate 112 of the linear gravity chute 11 under the action of the gravitational force and the jamming of the oval part 16 on the lateral guides 111 of the linear gravity chute 11 is minimized. Alternatively, the bottom plate 112 of the linear gravity chute 11 can be perpendicular to the upper surface 71 of the plate of the base 7.

In another embodiment, the supporting legs 1 are height adjustable and the lower part 2 of the feeder comprises an unillustrated hinge connection connecting the lower part 2 of the feeder to the bearing 6, so that the inclination of the bottom plate 112 of the linear gravity chute 11 of the feeder can be increased or decreased within an inclination angle α of 10° to 40° and optimized according to the type of oval parts 16 to be fed, so that for each type of oval part 16 the ideal inclination can be set at which the oval part 16 rolls by gravity over the bottom plate 112 of the linear gravity chute 11 and the risk of oval part 16 getting stuck on the lateral guide 111 of the linear gravity chute 11 is minimized.

An example of production equipment using a feeder of oval parts 16 according to the present invention is, for example, production equipment for manufacturing silent blocks, which comprises an unillustrated control unit, at least one feeder according to any of the embodiments described above, at least one unillustrated camera for monitoring the oval parts 16 located outside the feeder, at least one unillustrated handling device with a gripping device, such as tongs, for removing the oval parts 16 from the removal bed 9 and at least one unillustrated production unit for further processing of the oval parts 16 and/or assembling the product, e.g., a unit for oiling parts or a press for pressing silent blocks.

The production equipment comprises a feeder arranged on the base 7 which is preferably made as a common base of the feeder and unillustrated production units, ideally also as a common base of an unillustrated handling device, e.g., a robotic manipulator.

The camera, the sensor 12 for detecting an oval part 16 in the linear gravity chute 11, the sensor 10 for detecting an oval part in the removal bed 9, the vibrating device 8, the separating device 13, the handling device and the production unit are coupled to an unillustrated common control unit which, according to a predetermined type of product to be manufactured, using a computer program, controls the process of the feeding of oval parts 16 by the feeder, removing of the oval parts 16 by the handling device and processing of the oval parts 16 and/or assembling of products in the production unit.

The above-described production equipment is used to assemble products that include a flexible oval part 16, e.g., in the shape of a cylinder, tube, disk or ring. The product is assembled in such a way that an inserter of oval parts 16 or a human operator of the device insert the oval parts 16 into the inlet opening 114 of the linear gravity chutes 11, in the exemplary embodiment of the feeder described above into three linear gravity chutes 11 for inserting rubber rings and into two linear gravity chutes 11 for inserting metal tubes. The rubber rings are preferably inserted into the linear gravity chutes 11 side-oriented so that the technological inlets from the compression pressing of the rubber ring are always oriented to one side, e.g., to the right, so that there is no need to control and change their orientation in the removal bed 9. The correct lateral orientation of the oval part 16 in the removal bed 9 is monitored by the camera connected to the control unit, which, upon detecting an incorrectly inserted **o**val part 16, sends an instruction to the handling device to rotate the oval part 16 laterally by the handling device after removing the oval part 16 from the removal bed 9.

The oval parts 16 inserted in the feeder are rolled by gravity down on the inclined plane of the bottom plate 112 of the linear gravity chute 11 towards the removal bed 9, wherein the movement of the oval parts 16 in the linear gravity chute 11 is facilitated by vibrations in the form of lateral oscillations of the linear gravity chute 11, which are caused by the vibrating device 8, in sequences interrupted by intervals, wherein the sequences of oscillations and interrupt intervals between them are pre-entered into the control unit, depending on the type of product. In addition to these preventive vibrations of the linear gravity chute 11, the control unit also actuates the vibrating device 8 in the event that the sensor 12 of the linear gravity chute 11 detects the absence of oval parts 16 in the linear gravity chute 11 in the lower part 2 of the feeder, above the separating device 13.

The oval part 16 being fed is at the lower end of the linear gravity chute 11 separated from the other oval parts 16 arranged above it by the separating device 13, wherein the first flap 131 of the separating device 13 serves to separate the last oval part 16 in the linear gravity chute 11 and the second flap 133 arranged lower serves to release controllably the oval part 16 to the removal bed 9. The operation of the flaps 131, 133 is controlled by the control unit, according to a computer program, which is preselected according to the specified product type. The separation of the first oval part 16 from the second oval part 16, to which the first oval part 16 is adjacent, and the gravitational movement of the oval parts 16 in the lower part 2 of the feeder are facilitated by the blower 19 of oval parts 16 which blows air over the oval parts 16, wherein by the first upper nozzle 191 directs the air stream towards the linear gravity chute 11 above the first flap 131, whereas the second lower nozzle 192 directs the air stream towards the linear gravity chute 11 above the second lower flap 133. The presence and type of oval part 16 in the removal bed 9 are detected by the sensor 10 for detecting an oval part 16 in the removal bed 9 connected to the control unit and arranged on the bottom side of the removal bed 9, e.g., by a pressure switch, so that the weight and/or dimensions of the oval part 16 situated in the removal bed 9 are determined. The handling device controlled by the control unit removes the oval parts 16 from the removal beds 9, wherein the oval parts 16 detected by the sensor 10 for detecting an oval part 16 in the removal bed as faulty are placed by the handling device to an unillustrated box for discarded oval parts 16 and the oval parts 16 detected as correct are placed to the production unit in which they are further processed and which is controlled by the common control unit.

The above-described movement of the lightweight flexible oval parts 16 in the linear gravity chute 11 may cause the oval part 16 to get stuck or jam on the lateral guide 111 of the linear gravity chute 11 and/or cause adjacent oval parts 16 to stick together. To release and prevent the jamming of the oval parts 16, the above-described vibrating device 8 is used, which strikes the supporting leg 4 of the feeder by the impact head 82 at a frequency of 1 Hz to 20 Hz, which moves at a speed of 0.1 ms⁻¹ to 1 ms⁻¹, preferably 0.3 ms⁻¹. The vibrating device 8 strikes the supporting leg 4 of the feeder from the side, substantially perpendicularly to the direction of the linear gravity chutes 11 and the direction of the movement of the parts 16 to be fed, so that it first strikes from the first side and then strikes from the second opposite side. After a sequence of impacts of a predetermined number of impacts, the operation of the vibrating device 8 is interrupted by an interval, wherein the last impact is guided from the side to which, in the case of inserted parts 16, the above-mentioned technological protrusions of rubber parts 16 are oriented. Consequently, the side of the part 16 with the protrusions is **bounced** away from the lateral guide 111 of the linear gravity slide 11 by the last strike of the head 82 of the vibrating device 8 at the end of the sequence of impacts, e.g., the impact is directed towards the right and the oval part 16 is **bounced** towards the left. Thus, the risk of the oval parts 16 getting stuck by the technological protrusions on the lateral guide 111 of the linear gravity chute 11 is minimized.

The vibrating device 8 is arranged in the upper part 1 of the feeder, so that when the impact head 82 of the vibrating device 8 strikes the supporting leg 1 of the feeder, the upper end of the linear gravity chute 11, which is in the lower part 2 of the feeder rotatably mounted in the bearing 6, substantially in a circle, is displaced, wherein the upper end of the linear gravity chute 11 of the feeder moves at a speed of 0.1 ms¹ to 1 ms⁻¹. The path of the oscillation/displacement of the upper end of the linear gravity chute 11 of the feeder is limited by the stop 83 of the supporting leg 4, which the supporting leg 4, in another unillustrated embodiment of the feeder, strikes and the oscillation of the upper end of the linear gravity chute 11 of the feeder is thus stopped.

The above-described design of the mounting of the upper part 1 and the lower part 2 of the feeder on the base 7 and the location of the vibrating device 8 in the upper part 1 of the feeder causes the linear gravitational chute 11 to move its upper end along a longer path than its lower end during its oscillations. The advantage of such a design is that the lower end of the linear gravity chute 11 in the lower part 9 of the feeder is displaced, relative to the adjacent removal bed 9, only along such a short path that this movement of the lower part 9 of the feeder does not impede the release of the part 16 from the separating device 13 through the lower end of the moving linear gravity chute 11 into the removal bed 9 during operation of the vibrating device 8. However, such an advantageous solution for the smooth operation of the feeder brings with it the disadvantage of lower efficiency of the above-described vibrating device 8 in the lower part 2 of the feeder. This problem is solved by a preferred embodiment of the feeder with the above-described blower 19 of oval parts 16, which is arranged in the lower part 2 of the feeder, so that a stream of gas, e.g., air, strikes the last and penultimate oval part 16 at the lower end of the linear gravity chute 11 and facilitates separation of the last oval part 16 from the adjacent penultimate oval part 16 and from the lateral guide 111 of the linear gravity chute 11.

The above-described production equipment provided with a feeder of oval parts 16, a handling device and a common control unit feeds the oval parts 16 by first inserting the oval part 16 into the inlet opening 114 in the upper part 1 of the feeder and then moving the oval part 16 by gravity on the inclined plane of the bottom plate 112 of the linear gravity chute 11 towards the removal bed 9 in the lower part 2 of the feeder. The jamming of the oval part 16 in the linear gravity chute 11 is prevented by oscillating the feeder horizontally in the direction S of movement of the linear gravity chute 11 substantially perpendicular to the direction of movement of the part 16 in the linear gravity chute 11, wherein the individual sequences of oscillations are interrupted by intervals. During the sequence of oscillations, the feeder oscillates back and forth around the axis of the bearing 6. During the feeding of the part 16, the presence of the oval part 16 in the lower part 2 of the feeder is detected by the sensor 12 of the linear gravity chute 11 and the data is transmitted to the control unit, then the oval part 16 is separated by the separating device 13 by being released through the first flap 131 and being retained by the second flap 133 while being blown by the blower 19 of oval parts 16 with a stream of air. Subsequently, the oval part 16 is released through the second flap 133 into the removal bed 9. In the removal bed 9, the type of oval part 16 is determined by the sensor 10 for detecting an oval part 16 in the removal bed 9, e.g., by determining the dimensions and/or weight of the oval part 16, the lateral orientation of the oval part 16 is detected by the camera and the data is transmitted to the control unit. If it is found that the type of oval part 16 corresponds to the pre-set value of the type of oval part 16, the oval part 16 is removed by the handling device from the removal bed 9 and is placed in the production unit. If it is found that the type of oval part 16 does not correspond to the pre-set value of the type of oval part 16, the oval part 16 is removed by the handling device and is placed in a box (not shown) for faulty oval parts 16. If it is found that the oval part 16 corresponds to the pre-set value of the type of oval part 16, but is incorrectly side-oriented, the oval part 16 is rotated into the correct position by the handling device before being placed in the production unit.

If the sensor 12 of the linear gravity chute 11 and/or the sensor 10 of the removal bed 9 detect the absence of an oval part 16 in the feeder part monitored by the sensor 12, 10, the data on the absence of the oval part 16 is transmitted to the control unit, and the vibrating device 8 is started by the control unit. The oval part 16 is then released by oscillating the linear gravity chute 11 of the feeder horizontally in the direction S of movement of the linear gravity chute 11 substantially perpendicular to the direction of movement of the oval part 16 in the linear gravity chute 11, about the axis of the bearing 6, in sequences interrupted by intervals.

### List of references

- 1: upper part of the feeder
- 2: lower part of the feeder
- 3: mounting of the upper part of the feeder
- 4: supporting leg
- 5: sliding pad
- 6: bearing
- 7: base
- 71: upper surface of the plate of the base
- 8: vibrating device
- 81: drive
- 82: impact head
- 83: stop of the supporting leg
- 9: removal bed
- 10: sensor for detecting an oval part in the removal bed
- 11: linear gravity chute
- 111: lateral guide of the linear gravity chute
- 112: bottom plate of the linear gravity chute
- 113: upper cover of the linear gravity chute
- 114: inlet opening of the linear gravity chute
- 12: sensor for detecting an oval part in the linear gravity chute
- 13: separating device
- 131: first flap
- 132: first flap drive
- 133: second flap
- 134: second flap drive
- 16: oval part
- 19: blower of oval parts
- 191: first nozzle
- 192: second nozzle
- S: direction of movement of the linear gravity chute
- α: inclination angle

## Claims

1. A feeder of oval parts (16) which comprises a linear gravity chute (11) for guiding oval parts (16), wherein the linear gravity chute (11) is provided with an inlet opening (114) at its upper end and abuts a removal bed (9) of oval parts (16) with its lower end, the removal bed (9) being associated with a sensor (10) for detecting oval parts (16) in the removal bed (9), and a separating device (13) for controlled release of individual oval parts (16) from the linear gravity chute (11) to the removal bed (9), wherein the linear gravity chute (11) is further provided with a sensor (12) for detecting an oval part (16) in the linear gravity chute (11) and the linear gravity chute (11) is coupled to a vibrating device (8), **characterized in that** the lower end of the linear gravity chute (11) is mounted rotatably about a vertical axis near the removal bed (9) and the upper end of the linear gravity chute (11) is movably reversibly mounted in the horizontal plane about said vertical axis, wherein the vibrating device (8) is adapted to cause movement of the upper end of the linear gravity chute (11) in the horizontal plane about said vertical axis.

2. The feeder according to claim 1, **characterized in that** the vibrating device (8) comprises at least one drive (81) and at least one stop (83) for reversible displacement of the upper end of the linear gravity chute (11).

3. The feeder according to claim 1 or 2, **characterized in that** the linear gravity chute (11) is provided with a transparent upper cover (113).

4. The feeder according to any of the preceding claims, **characterized in that** the separating device (13) comprises a first flap (131) for controlled release of an oval part (16) from the supply of oval parts (16) in the feeder, a second flap (133) for controlled release of an individual oval part (16) into the removal bed (9) and a nozzle (192) of a blower (19) for releasing an oval part (16) in the feeder by a stream of air, wherein the second flap (133) is arranged below the first flap (131) and the nozzle (192) of the blower (19) is arranged between the flaps (131, 133).

5. The feeder according to any of the preceding claims, **characterized in that** the vibrating device (8), the separating device (13), the sensor (12) for detecting oval parts (16) in the linear gravity chute (11) and the sensor (10) for detecting oval parts (16) in the removal bed (9) are coupled to a common control unit which is provided with software for controlled feeding and removing oval parts (16).

6. A method of feeding oval parts (16) performed by the feeder according to any of claims 1 to 5, **characterized in that** when an oval part (16) is fed by a linear gravity chute (11), the linear gravity chute (11) moves reciprocally rotatably in the horizontal plane about a vertical axis, thus releasing the fed oval part (16) for rolling by the linear gravity chute (11) towards a removal bed (9) from which it is then removed for further use.

7. The method according to claim 6 **characterized in that** the linear gravity chute (11) is subjected reciprocally intermittently to swinging action after the jamming of an oval part (16) in the linear gravity chute (11) is detected.

8. The method according to claim 6 or 7, **characterized in that** the linear gravity chute (11) is acted upon by reciprocal oscillations in impact sequences which are interrupted by intervals, wherein the fed oval part (16) is released from the lateral guide (111) of the linear gravity chute (11).

## Patentansprüche

1. Zuführvorrichtung von ovalen Teilen (16), die eine lineare Schwerkraftrutsche (11) zur Führung von ovalen Teilen (16) aufweist, wobei die lineare Schwerkraftrutsche (11) an ihrem oberen Ende eine Eingangsöffnung (114) aufweist und mit ihrem unteren Ende an ein Entnahmebett (9) von ovalen Teilen (16) anliegt, wobei dem Entnahmebett (9) ein Sensor (10) zur Detektion von ovalen Teilen (16) im Entnahmebett (9) und eine Trenneinrichtung (13) zum gesteuerten Durchlassen von einzelnen ovalen Teilen (16) aus der linearen Schwerkraftrutsche (11) ins Entnahmebett (9) zugeordnet sind, wobei die lineare Schwerkraftrutsche (11) weiter einen Sensor (12) zur Detektion des ovalen Teils (16) in der linearen Schwerkraftrutsche (11) aufweist und die lineare Schwerkraftrutsche (11) mit einer Vibrationseinrichtung (8) verkoppelt ist, **dadurch gekennzeichnet, dass** das untere Ende der linearen Schwerkraftrutsche (11) an dem Entnahmebett (9) um die vertikale Achse herum drehbar gelagert ist und das obere Ende der linearen Schwerkraftrutsche (11) in der horizontalen Ebene um die erwähnte vertikale Achse herum umkehrbar beweglich gelagert ist, wobei die Vibrationseinrichtung (8) zum Auslösen der Bewegung des oberen Endes der linearen Schwerkraftrutsche (11) in der horizontalen Ebene um die erwähnte vertikale Achse herum angepasst ist.

2. Zuführvorrichtung nach dem Anspruch 1, **dadurch gekennzeichnet, dass** die Vibrationseinrichtung (8) mindestens einen Antrieb (81) und mindestens einen Anschlag (83) zum umkehrbaren Ausschwenken des oberen Endes der linearen Schwerkraftrutsche (11) aufweist.

3. Zuführvorrichtung nach dem Anspruch 1 oder 2, **dadurch gekennzeichnet, dass** die lineare Schwerkraftrutsche (11) transparenten oberen Deckel (113) aufweist.

4. Zuführvorrichtung nach einem der vorangehenden Ansprüche, **dadurch gekennzeichnet, dass** die Trenneinrichtung (13) eine erste Klappe (131) zur gesteuerten Freigabe des ovalen Teils (16) aus dem Vorrat der ovalen Teile (16) in der Zuführvorrichtung, eine zweite Klappe (133) zum gesteuerten Durchlassen eines einzelnen ovalen Teils (16) ins Entnahmebett (9) und eine Düse (192) des Abblasens zur Freigabe des ovalen Teils (16) in der Zuführvorrichtung durch Luftstrom aufweist, wobei die zweite Klappe (133) unter der ersten Klappe (131) platziert ist und die Düse (192) des Abblasens (19) zwischen den Klappen (131, 133) platziert ist.

5. Zuführvorrichtung nach einem der vorangehenden Ansprüche, **dadurch gekennzeichnet, dass** Vibrationseinrichtung (8), Trenneinrichtung (13), Sensor (12) zur Detektion von ovalen Teilen (16) in der linearen Schwerkraftrutsche (11) und Sensor (10) zur Detektion von ovalen Teilen (16) im Entnahmebett (9) mit einer gemeinsamen Steuereinheit verkoppelt sind, die eine Software zur gesteuerten Zuführung und Entnahme von ovalen Teilen (16) aufweist.

6. Verfahren zur Zuführung von ovalen Teilen (16), das durch die Zuführvorrichtung nach einem der Ansprüche 1 bis 5 ausgeführt wird, **dadurch gekennzeichnet, dass** bei der Zuführung vom ovalen Teil (16) durch die lineare Schwerkraftrutsche (11) mit der linearen Schwerkraftrutsche (11) umkehrbar schwenkbar in der horizontalen Ebene um die vertikale Achse herum bewegt wird, wodurch das zuzuführende ovale Teil (16) zum Abrollen durch die lineare Schwerkraftrutsche (11) zum Entnahmebett (9) hin freigegeben wird, von dem dieses zur nächsten Verwendung entnommen wird.

7. Verfahren nach dem Anspruch 6, **dadurch gekennzeichnet, dass** auf die lineare Schwerkraftrutsche (11) nach der Ermittlung der Verklemmung des ovalen Teils (16) in der linearen Schwerkraftrutsche (11) umkehrbar schwenkbar unterbrochen gewirkt wird.

8. Verfahren nach dem Anspruch 6 oder 7, **dadurch gekennzeichnet, dass** auf die lineare Schwerkraftrutsche (11) in Anprallsequenzen umkehrbar schwenkbar gewirkt wird, die durch Verzögerungen abgetrennt sind, wodurch das zuzuführende ovale Teil (16) von der seitlichen Führung (111) der linearen Schwerkraftrutsche (11) gelöst wird.

## Revendications

1. Distributeur de pièces ovales (16) comprenant une goulotte linéaire gravitaire (11) qui permet de guider les pièces ovales (16) ; la goulotte linéaire gravitaire (11) est, à son extrémité supérieure, pourvue d'une ouverture d'entrée (114) et par son extrémité inférieure repose sur un bac de récupération (9) de pièces ovales (16), tandis que le bac de récupération (9) est pourvu d'un détecteur (10) de pièces ovales (16) dans le bac de récupération (9) et d'un dispositif de séparation (13) qui assure le passage contrôlée des pièces ovales individuelles (16) de la goulotte linéaire gravitaire (11) dans le bac de récupération (9) ; la goulotte linéaire gravitaire (11) est en outre équipée d'un détecteur (12) de pièces ovales (16) dans la goulotte linéaire gravitaire (11), et la goulotte linéaire gravitaire (11) est couplée à un dispositif vibrant (8), **caractérisé en ce que** l'extrémité inférieure de la goulotte linéaire gravitaire (11) est disposée de manière rotative autour de l'axe vertical au niveau du bac de récupération (9) et l'extrémité supérieure de la goulotte linéaire gravitaire (11) est disposée de manière mobile et réversible dans un plan horizontal autour dudit axe vertical, le dispositif vibrant (8) étant adapté pour provoquer le déplacement de l'extrémité supérieure de la goulotte linéaire gravitaire (11) dans un plan horizontal autour dudit axe vertical.

2. Distributeur selon la revendication 1, **caractérisé en ce que** le dispositif vibrant (8) comprend au moins un moteur (81) et au moins une butée (83) pour dévier de manière réversible l'extrémité supérieure de la goulotte linéaire gravitaire (11).

3. Distributeur selon la revendication 1 ou 2, **caractérisé en ce que** la goulotte linéaire gravitaire (11) est pourvue d'un couvercle supérieur transparent (113).

4. Distributeur selon l'une des revendications ci-dessus, **caractérisé en ce que** le dispositif de séparation (13) comprend un premier clapet (131) pour assurer le passage contrôlé de la pièce ovale (16) depuis le magasin de pièces ovales (16) dans le distributeur, un deuxième clapet (133) pour assurer le passage contrôlé de pièces ovales individuelles (16) vers le bac de récupération (9), et une buse (192) de soufflage qui permet de libérer la pièce ovale (16) dans le distributeur par un flux d'air, tandis que le deuxième clapet (133) se situe en-dessous du premier clapet (131) et la buse (192) de soufflage (19) se situe entre les clapets (131, 133).

5. Distributeur selon l'une des revendications ci-dessus, **caractérisé en ce que** le dispositif vibrant (8), le dispositif de séparation (13), le détecteur (12) de pièces ovales (16) dans la goulotte linéaire gravitaire (11) et le détecteur (10) de pièces ovales (16) dans le bac de récupération (9) sont couplés à l'unité de commande commune, munie d'un logiciel pour l'alimentation et récupération contrôlées de pièces ovales (16).

6. Procédé de distribution de pièces ovales (16) assuré par le distributeur selon l'une des revendications de 1 à 5, **caractérisé en ce que** lors de la distribution de la pièce ovale (16) par la goulotte linéaire gravitaire (11) celui-ci oscille et se déplace dans la goulotte linéaire gravitaire (11) de manière réversible dans un plan horizontal autour de l'axe vertical, libérant ainsi la pièce ovale (16) pour lui permettre le passage par la goulotte (11) vers le bac de récupération (9), d'où elle est ensuite retirée pour une utilisation ultérieure.

7. Procédé selon la revendication 6, **caractérisé en ce qu'**une force est exercée sur la goulotte linéaire gravitaire (11) de manière réversible et intermittente par oscillation après la détection d'une pièce ovale (16) coincée dans la goulotte linéaire gravitaire (11).

8. Procédé selon la revendication 6 ou 7, **caractérisé en ce qu'**une force est exercée sur la goulotte linéaire gravitaire (11) de manière réversible par oscillation dans des séquences d'impact séparées par intervalles, libérant ainsi le passage de la pièce ovale (16) distribuée dans la partie latérale (111) de la goulotte linéaire gravitaire (11).
